# EUROPÄISCHE PATENTSCHRIFT

(11) **EP 2 045 065 B1**
(45) Veröffentlichungstag und Bekanntmachung des Hinweises auf die Patenterteilung: **25.04.2018**
(21) Anmeldenummer: 08016418.9
(22) Anmeldetag: 18.09.2008
(51) Int. Cl.: B29C 45/73, B29C 33/38

(54) **Spritzgießform zum Einsatz in einer Spritzgießvorrichtung**
Injection moulding form for use in an injection moulding device
Moule de moulage par injection destiné à être utilisé dans un dispositif de moulage par injection

(30) Priorität: 04.10.2007 DE 102007047617
(43) Veröffentlichungstag der Anmeldung: 08.04.2009
(73) Patentinhaber: Werkzeugbau Siegfried Hofmann GmbH, 96215 Lichtenfels (DE)
(72) Erfinder: Hofmann, Günter, 96215 Lichtenfels (DE)
(74) Vertreter: Kohl, Fabian Hanno

(56) Entgegenhaltungen:
- US-A- 5 516 470
- US-A1- 2004 103 709

## Beschreibung

Die Erfindung betrifft eine Spritzgießform zum Einsatz in einer Spritzgießvorrichtung. Derartige Spritzgießformen weisen wenigstens ein Formelement auf, in das beim Spritzgießvorgang ein Kunststoffmaterial eingespritzt werden kann und dort verfestigt. Nach dem Spritzgießvorgang kann die Form, die ein- oder mehrteilig ausgebildet sein kann, geöffnet werden und das gespritzte Bauteil entnommen werden.

Es ist auch bereits bekannt geworden, mit einer kombinierten Heiz- und Kühlvorrichtung in dem Formelement wenigstens eine Formoberfläche thermisch zu variieren, wobei die Heiz- und Kühlvorrichtung wenigstens einen sich hinter der Formoberfläche erstreckenden Hohlraum aufweist, der von einem Heizmedium durchsetzt wird und dessen Wandungen von einem expandierenden Kühlmedium beaufschlagt werden können.

Bekannte beheizte und gekühlte Formen für Spritzgießeinrichtungen ergeben sich z.B. aus EP 1 110 692 A1, US 6,752,612 und US 6,936,206 B1.

US 2004/103709 A1 beschreibt eine Spritzgießform zum Einsatz in einer Spritzgießvorrichtung, welche zur Zuführung von Kühlmittel in einen Hohlraum mehrere Kühlmittelzuführungskanäle aufweist.

US 5 516 470 lehrt eine Spritzgießform zum Einsatz in einer Spritzgießvorrichtung, bei der das Spritzgießwerkzeug eine oder mehrere Teile umfasst, die aus einem Sintermaterial hergestellt sind. Das Spritzgießwerkzeug umfasst Kühlkanäle, in denen kaltes oder warmes Gas hindurchgeführt wird. Das Gas kann auch in einem flüssigen Aggregatszustand durchgeführt werden. Die Flüssigkeit wechselt durch Expansionen in einen gasförmigen Zustand in einen hierfür im Formwerkzeug vorgesehenen Expansionsraum. Dadurch wird eine starke Kühlung des Formwerkzeugs erreicht. Die Formhälften des Formwerkzeugs sind aus einem porös gesinterten Material aufgebaut, so dass über Kapillare frei in den Expansionsraum führende Kanäle das Kühlmedium in den Expansionsraum und von dort aus über die zur Formoberfläche offenen Poren des Formwerkzeuges zu dieser geführt werden können.

Der Erfindung liegt die Aufgabe zugrunde, eine Spritzgießform mit den Merkmalen des Oberbegriffes des Anspruches 1 derart weiterzubilden, daß eine möglichst effiziente Heizung und Kühlung auch schwieriger Formbereiche ermöglicht wird, die Heiz- und Kühlzyklenzeiten verringert sind und der bauliche Aufwand für die Heiz- und Kühlvorrichtung verringert ist. Diese Aufgabe wird dadurch gelöst, dass die Anzahl der Kühlmittelzuführungsöffnungen in den Hohlraum größer ist als die der Heizmittelzuführungsöffnungen. Diese Merkmalskombination führt in vorteilhafter Weise dazu, daß zunächst der bauliche Aufwand reduziert ist, da ein und derselbe Hohlraum sowohl von einem dampfartigen Heizmittel durchsetzt wird, als auch von einem expandierenden Kühlmittel beaufschlagt wird, wobei eine Vergleichmäßigung und Effizienzsteigerung der Kühlung dadurch herbeigeführt wird, daß eine erhöhte Anzahl von Kühlmittelzuführungsöffnungen in den Hohlraum führt. Werden die Kühlmittelzuführungsöffnungen gezielt dort plaziert, wo relativ hohe Kühlleistungen gewünscht werden, dann kann die Kühlleistung auch besonders schwierigen Verhältnissen angepaßt werden. Vorteilhafte Weiterbildungen der Erfindung ergeben sich aus den Unteransprüchen 2 - 14.

In vorteilhafter Weise wird die Struktur sowohl des Hohlraumes als auch der zu diesen führenden Kühlmittelzuführungsöffnungen durch ein generatives Verfahren hergestellt, dadurch lassen sich hochkomplexe Strukturen bezogen auf den Hohlraum als auch auf die Kühlmittelzuführungsöffnungen und bedarfsweise auch Heizmittelzuführungsöffnungen erreichen.

Es hat sich ferner als sehr zweckdienlich erwiesen, wenn die Kühlmittelzuführungsöffnungen mit einem derartigen Abstand voneinander angeordnet sind, daß sich die von diesen ausgehenden Kühleffektbereiche jeweils überlappen. Damit wird eine über die Konturform des Werkzeugs hinweg konstante Kühlleistung erreicht, die sich wiederum positiv auf die Qualität des gespritzten Kunststoffteils auswirkt.

Die Verwendung eines generativen Aufbauverfahrens, wie beispielsweise eines selektiven Lasersinter- oder Laserschmelzverfahrens, ermöglicht es, die Kühlmittelzuführöffnungen düsenartig oder in Form einer porösen Gasdurchtrittsstruktur auszubilden. Insbesondere die poröse Gasdurchtrittsstruktur wird über ein generatives Herstellungsverfahren wirtschaftlich realisiert.

In einer vorteilhaften Ausführungsform ist wenigstens ein Hohlraum flächig hinter einer zu kühlenden Formfläche angeordnet und besitzt zur Erlangung einer ausreichenden Stabilität eine Mehrzahl von Stützelementen. Dabei können die Stützelemente zumindest teilweise mit porösen Abschnitten versehen sein, die wiederum als Kühlmittelzuführungsöffnungen dienen können. Alternativ oder zusätzlich zu den als Kühlmittelzuführungsöffnungen ausgebildeten Stützelementen lassen sich die Kühleigenschaften der Spritzgießform auch durch eine im wesentlichen zentrale, zwischen den Stützelementen (Stützsäulen) plazierte Anordnung der Zuführungsöffnungen erreichen. Ein flächiger Hohlraum mit seinen Stützelementen, die vorteilhafterweise als Wärme- und Kälteübertragungselemente ausgebildet sind, kann beispielsweise als flächiger Hohlraum mit Stützsäulen, die gewölbeartig geformt sind, ausgebildet sein. Dabei kann sich der Durchmesser der Stützsäulen in ihrem der Werkzeugformoberfläche zugewandten Endbereich kontinuierlich vergrößern. Auch die Oberfläche der Stützsäulen oder die von ihnen abgestützte Oberseite des Hohlraumes kann zumindest teilweise mit einer Rippen- oder Noppenstruktur versehen sein. All diese Ausgestaltungen erhöhen sowohl die Stabilität der Spritzgießform, als auch die Wärmeleitfähigkeit, insbesondere des Hohlraumes relativ zur Werkzeugformoberfläche. Beispielsweise wird durch die gewölbeartige Ausgestaltung der Hohlräume und deren Säulen eine gezielt zu der Werkzeugformoberfläche hingerichteten Oberflächenvergrößerung der Hohlraumwandung erreicht, die eine bessere und schnellere Wärmedurchleitung der Spritzgießform bei wechselnden Heiz- und Kühlmedien gewährleistet.

Ein schnelleres Ansprechverhalten der Spritzgießform bezogen auf die Übertragung der Kühlwirkung des Kühlmittels läßt sich auch dadurch erreichen, daß die Zuführrichtung des Kühlmittels im wesentlichen gegen die Formoberfläche gerichtet ist. Dahingegen kann die Zuführrichtung des Heizmediums den Hohlraum im wesentlichen parallel zu der beheizenden Formoberfläche durchsetzen.

Im Sinne einer Zusatzfunktion kann es vorgesehen sein, auf der Rückseite des Hohlraums durch das generative Herstellungsverfahren eine Schicht geringerer Dicke anzuordnen. Durch eine derartige Schicht wird eine Isolationsschicht auf der von der Werkzeugformoberfläche abweisenden Seite der Spritzgießform erreicht, die dazu führt, daß Wärme- und Kälteänderungen in den "unerwünschten Bereich" (von der Formoberfläche abgewandter Bereich) verhindert oder zumindest reduziert wird. Gleichzeitig wird die Heiz- und Kühlwirkung der Spritzgießform an deren gewünschten Bereich (Werkzeugformoberfläche) erhöht, da weniger Wärme- und Kälteverluste durch den der Formoberfläche abgewandten Bereich der Spritzgießform zu verzeichnen sind. Alternativ oder zusätzlich zu einer Schicht geringerer Dichte ist es ebenso vorteilhaft, statt oder zusätzlich zu der geringeren Dichte in dem generativen Herstellungsverfahren ein anderes Baumaterial zu verwenden.

Eine weitere vorteilhafte Maßnahme ist es, an dem Hohlraum eine Einlaßöffnung für ein Trocknungsmedium anzuordnen. Durch das Trocknungsmedium können insbesondere durch die Kondensation erzeugte Flüssigkeitsbestandteile abgeführt oder verdampft werden. Ein einfaches Beispiel für ein Trocknungsmedium wäre die Einführung von Heizluft für einen kurzen Zeitraum.

Zur Erhöhung der Prozeßsicherheit und der gezielteren und schnelleren Durchführung des Prozesses ist es von Vorteil, wenn vor der mindestens einen Zuführungsöffnung für das Wasserdampf umfassende Heizmedium ein Wasserdampfdruckregulierungselement angeordnet ist. Dabei kann die Wasserdampfdruckregulierung mindestens ein Regelventil umfassen, das im Einlaß- und/oder Auslaßkanal für den Wasserdampf angeordnet ist. Darüber hinaus läßt sich die Prozeßsicherheit dadurch steigern, daß eine Heiz-Kühlzyklensteuerungseinrichtung vorgesehen ist, deren Steuerungsausgänge mit einem Druckregelventil für Wasserdampf im Einlaß- und/oder Auslaßkanal der Spritzgießform, mindestens einen Ventil in einem Kühlmittelzuführkanal und mit mindestens einen Druckventil in einem Druckzuführungskanal versehen ist. Die Ventile verhindern insbesondere ein Austreten von Wasserdampf, Druckluft und/oder des Kühlmittels in einer jeweils nicht dafür vorgesehenen Verfahrensrichtung. Im übrigen sei noch darauf hingewiesen, daß die Heiz-Kühlzyklensteuerungseinrichtung mit wenigstens einem thermischen Sensor verbunden sein kann, der in wenigstens einem Bereich des vom Kühlmittel oder Heizmittel beaufschlagten Hohlraumes der Spritzgießform angeordnet ist. Über einen derartigen thermischen Sensor läßt sich der komplette Spritzgießformprozeß weiter optimieren, da der Sensor die tatsächliche Temperatursituation im jeweiligen Teilschritt des Spritzgießprozesses ausgeben kann und beispielsweise über eine Computersteuerung in den Regelungsprozeß des Heiz- und/oder Kühlmittels regelnd eingreifen kann.

Neben der Spritzgießvorrichtung betrifft die Erfindung auch ein Verfahren zur Beheizung und Kühlung einer Spritzgießform, gemäß den Merkmalen des Anspruchs 15. Als Heizmedium wird ein dampfartiges Medium, insbesondere Wasserdampf verwendet und als Kühlmedium ein expandierendes Gas, insbesondere CO₂. Der erste Verfahrensschritt besteht aus einer ersten Heizphase, bei welcher der Wasserdampf unter hohem Druck in die Spritzgießform eingebracht wird. In einer zweiten Phase, bei welcher der Druck des Wasserdampfes abgesenkt wird, wird auch ein erstes Herunterkühlen der Spritzgießform und der Formoberfläche erreicht. Anschließend und gegebenenfalls abschließend wird in wenigstens einer Kühlphase das Kühlmedium, insbesondere CO₂, eingeleitet.

Vor dem Einleiten des Kühlmediums kann es zusätzlich vorgesehen sein, ein Trocknungsmedium durch den vom Wasserdampf beaufschlagten Innenbereich der Spritzgießform durchzuführen.

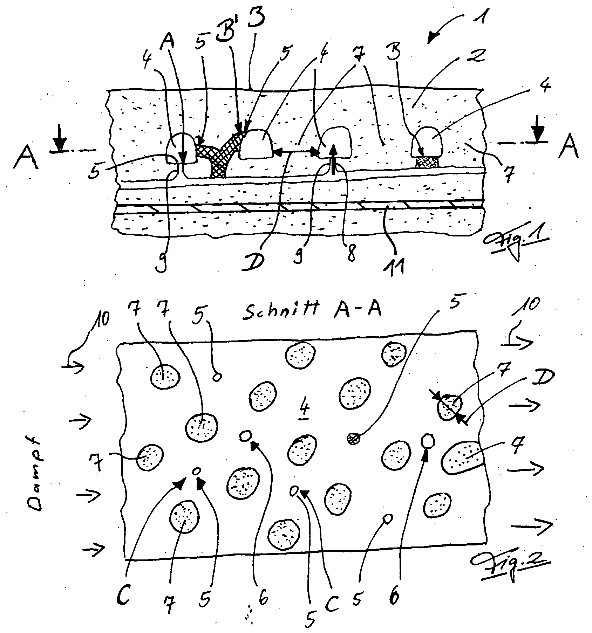

Die Erfindung ist anhand von Ausführungsbeispielen in den Zeichnungsfiguren näher erläutert. Diese zeigen
- Fig. 1: eine schematische Querschnittsdarstellung einer erfindungsgemäßen Spritzgießform (Formwandung);
- Fig. 2: eine schematische Schnittdarstellung nach Schnitt A-A gemäß Fig. 1;
- Fig. 3: ein schematischer Schaltplan einer erfindungsgemäßen Spritzgießform.

In Zeichnungsfigur 1 ist eine Spritzgießform 1 zum Einsatz in einer Spritzgießvorrichtung mit wenigstens einem Formelement 2 dargestellt, das mit einer Werkzeugformoberfläche 3 ausgebildet ist und das mit einer kombinierten Heiz- und Kühlvorrichtung versehen ist, mit welcher wenigstens eine Werkzeugformoberfläche 3 thermisch variierbar ist, wobei die Heiz- und Kühlvorrichtung wenigstens einen sich hinter der Werkzeugformoberfläche 3 erstreckenden Hohlraum 4 aufweist. Der Hohlraum 4 ist als kombinierter Kondensationsverdampfungsraum konzipiert, der sowohl durch ein zugeführtes expandierendes Kühlmittel als auch alternativ durch ein zugeführtes dampfartiges Heizmittel beaufschlagbar ist, wobei das Kühlmittel durch Kühlmittelzuführungsöffnungen 5 und das Heizmittel durch Heizmittelzuführungsöffnungen 6 in den Hohlraum 4 gelangen.

Insbesondere aus Zeichnungsfigur 2 ist deutlich erkennbar, daß die Anzahl der Kühlmittelzuführungsöffnungen 5 in den Hohlraum 4 größer ist als die der Heizmittelzuführungsöffnungen 6. Ebenso ist aus Zeichnungsfigur 2 deutlich erkennbar, daß der Hohlraum 4 sich im wesentlichen flächig erstreckt und dabei gegebenenfalls der Werkzeugformoberfläche 3 angepaßt werden kann. Insbesondere, wenn die Struktur sowohl des Hohlraumes 4 als auch der zu diesen führenden Kühlmittelzuführungsöffnungen 5 durch ein generatives Verfahren hergestellt werden, wird die Gestaltungs- und Auslegungsfreiheit des Hohlraumes 4 und der Kühlmittel- und Heizmittelzuführungsöffnungen 5, 6 erhöht. Beispielsweise sind die Kühlmittelzuführungsöffnungen 5 mit einem derartigen Abstand voneinander angeordnet, daß sich die von diesen ausgehenden Kühleffektbereiche jeweils überlappen. Die Kühlmittelzuführungsöffnungen 5 können durch das generative Herstellungsverfahren düsenartig (A) oder aber eine poröse Gasdurchtrittsstruktur 7 (B) ausgebildet sein. Der flächige Hohlraum 4 wird durch eine Mehrzahl von Stützelementen 7 (Stützsäulen) getragen und gewährleistet dabei die Prozeßstabilität der Spritzgießform 1. Darüber hinaus können die Stützelemente 7 zumindest teilweise mit porösen Abschnitten B' versehen sein, wobei innerhalb der aus porösen Abschnitten B' bestehenden Stützelemente 7 die Kühlmittelzuführungsöffnungen 5 angeordnet sind.

In der dargestellten Ausführungsform ist die Zuführrichtung 8 des Kühlmittels im wesentlichen zur Formoberfläche 3 gerichtet, wie z.B. an den rechtwinklig zur Werkzeugformoberfläche 3 verlaufenden Kühlkanalendabschnitten 9 erkennbar ist. Die Zuführrichtung 10 des Heizmediums durchsetzt den Hohlraum 4 im wesentlichen parallel zu der zu beheizenden Werkzeugformoberfläche 3. Zur Steigerung der effektiven Wärmewirkung des Kühl- bzw. Heizmittels relativ zu der Werkzeugformoberfläche 3 ist es zweckmäßig, wenn auf der Rückseite des Hohlraumes 4 durch das generative Herstellungsverfahren eine Schicht 11 mit geringerer Dichte angeordnet ist, so daß eine Isolationswirkung erreicht wird. Eine derartige Isolationsschicht 11 kann entweder als im wesentlichen luftdichter Hohlraum ausgebildet sein, aus dem in einem späteren Schritt Luft evakuiert werden kann und damit ein Vakuum und folglich eine thermisch isolierende Schicht 11 gebildet wird. Alternativ oder zusätzlich zu der Bildung von Hohlräumen innerhalb der Schicht 11 kann diese Schicht 11 im Zuge des generativen Herstellungsverfahrens auch durch die Verwendung eines schlecht wärmeleitenden Baumaterials gebildet werden.

Neben den Heiz- und Kühlkanälen innerhalb der Spritzgießform kann zusätzlich ein Kanal zur Führung eines Trocknungsmediums vorgesehen werden, wobei das Trocknungsmedium als permanenter oder gelegentlicher Verfahrenszwischenschritt konzipiert werden kann, um die im Zuge der Kondensation auftretenden Flüssigkeitsrückstände zuverlässig zu verhindern bzw. zu entfernen (nicht dargestellt).

Ferner können sowohl die Oberflächen der Stützsäulen 7, als auch die Rückseite der Formoberfläche 3 zumindest teilweise mit einer Rippen- oder Noppenstruktur (nicht dargestellt) zur Oberflächenvergrößerung versehen sein, wobei sich der Durchmesser D der Stützsäulen 7 in ihrem der Formoberfläche 3 zugewandten Endbereich kontinuierlich vergrößert. Dabei kann die Wandung des Hohlraumes 4 im Bereich zwischen den Stützsäulen 7 gewölbeartig geformt sein. Die Zuführungsöffnungen 5 für das Kühlmedium können - wie beispielsweise mit Pfeil C dargestellt - im wesentlichen zentral zwischen die Zuführungsöffnung 5 umgebende Stützsäulen 7 angeordnet sein.

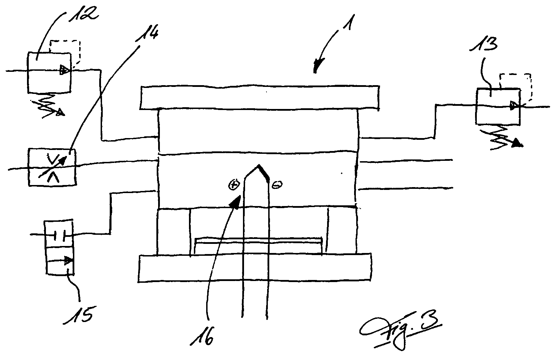

In dem Schaltplan gemäß Zeichnungsfigur 3 sind Ventile im Zusammenhang mit der erfindungsgemäßen Spritzgießvorrichtung dargestellt, wie sie die Ansprüche 13 ff. betrifft. Der für die Form verwendete Wasserdampf wird sowohl eingangs- als auch ausgangsseitig seines Wirkbereiches mit einem Druckregelventil 12, 13 versehen. Die Kühlmittelzuführung sieht zur besseren Steuerung und Regelung ein Stromregelventil 14 vor. In der in Figur 3 dargestellten Ausführungsform wird vor Einleitung des Kühlmediums ein Trocknungsmedium durch den vom Wasserdampf beaufschlagten Innenbereich der Spritzgießform geleitet. Hierfür ist zur Steuerung und Regelung ein 2/2-Wegeventil für die Druckluft vorgesehen.

Ferner umfaßt die Spritzgießform einen Temperatursensor 16, der durch seinen Output die Gestaltungsmöglichkeiten und die Abstimmung der restlichen Ventile und des Gesamtprozesses vergrößert.

### BEZUGSZEICHENLISTE

- 1: Spritzgießform
- 2: Formelement
- 3: Werkzeugformoberfläche
- 4: Hohlraum
- 5: Kühlmittelzuführungsöffnung
- 6: Heizmittelzuführungsöffnung
- 7: Stützelement
- 8: Zuführrichtung
- 9: Kühlkanalendabschnitt
- 10: Zuführrichtung
- 11: Schicht
- 12: Druckregelventil
- 13: Druckregelventil
- 14: Stromregelventil
- 15: 2/2-Wegeventil
- 16: Temperatursensor

- A: Düsen v. 5
- B: poröse Struktur v. 5
- C: Pfeil
- D: Durchmesser v. 7

## Patentansprüche

1. Spritzgießform (1) zum Einsatz in einer Spritzgießvorrichtung, mit wenigstens einem Formelement (2), das mit einer kombinierten Heiz- und Kühlvorrichtung versehen ist, mit welcher wenigstens eine Formoberfläche (3) thermisch variierbar ist, wobei die Heiz- und Kühlvorrichtung wenigstens einen sich hinter der Formoberfläche (3) erstreckenden Hohlraum (4) aufweist, wobei der Hohlraum (4) als kombinierter KondensationsVerdampfungsraum sowohl durch ein zugeführtes expandierendes Kühlmittel als auch alternativ durch ein zugeführtes dampfartiges Heizmittel beaufschlagbar ist,
**dadurch gekennzeichnet, daß**
die Anzahl der Kühlmittelzuführungsöffnungen (5) in den Hohlraum (4) größer ist als die der Heizmittelzuführungsöffnungen (6).

2. Spritzgießform nach Anspruch 1,
**dadurch gekennzeichnet, daß**
die Struktur sowohl des Hohlraumes (4) als auch der zu diesen führenden Kühlmittelzuführungsöffnungen (5) durch ein generatives Verfahren hergestellt ist.

3. Spritzgießform nach Anspruch 1 oder 2,
**dadurch gekennzeichnet, daß**
die Kühlmittelzuführungsöffnungen (5) mit einem derartigen Abstand voneinander angeordnet sind, daß sich die von diesen ausgehenden Kühleffektbereiche jeweils überlappen.

4. Spritzgießform nach einem der Ansprüche 1 - 3,
**dadurch gekennzeichnet, daß**
die Kühlmittelzuführungsöffnungen (5) durch das generative Herstellungsverfahren düsenartig (A) ausgebildet sind.

5. Spritzgießform nach einem der vorhergehenden Ansprüche,
**dadurch gekennzeichnet, daß**
die Kühlmittelzuführungsöffnungen (5) durch das generative Herstellungsverfahren eine poröse Gasdurchtrittsstruktur (B) aufweisen.

6. Spritzgießform nach einem der vorhergehenden Ansprüche,
**dadurch gekennzeichnet, daß**
sich der Hohlraum (4) flächig hinter einer zu kühlenden Formfläche (3) erstreckt und in dem Hohlraum (4) eine Mehrzahl von Stützelementen (7) angeordnet sind.

7. Spritzgießform nach einem der vorhergehenden Ansprüche,
**dadurch gekennzeichnet, daß**
die Stützelemente (7) zumindest teilweise mit porösen Abschnitten (B') versehen sind und in ihnen die Kühlmittelzuführungsöffnungen (5) angeordnet sind.

8. Spritzgießform nach einem der vorhergehenden Ansprüche,
**dadurch gekennzeichnet, daß**
die Zuführrichtung (8) des Kühlmittels im wesentlichen gegen die Formoberfläche (3) gerichtet ist.

9. Spritzgießform nach einem der vorhergehenden Ansprüche,
**dadurch gekennzeichnet, daß**
die Stützsäulen (7) als Wärme- und Kälteübertragungselemente ausgebildet sind.

10. Spritzgießform nach einem der vorhergehenden Ansprüche,
**dadurch gekennzeichnet, daß**
auf der Rückseite des Hohlraumes (4) durch das generative Herstellungsverfahren eine Schicht (11) geringerer Dichte angeordnet ist, um eine Isolationswirkung zu erreichen.

11. Spritzgießform nach einem der vorhergehenden Ansprüche,
**dadurch gekennzeichnet, daß**
die Wandung des Hohlraumes (5) im Bereich zwischen den Stützsäulen (7) gewölbeartig geformt ist.

12. Spritzgießform nach einem der vorhergehenden Ansprüche,
**dadurch gekennzeichnet, daß**
die Zuführungsöffnungen (5) für das Kühlmedium im wesentlichen zentral zwischen die Zuführungsöffnungen (5) umgebenden Stützsäulen (7) angeordnet sind.

13. Spritzgießform nach einem der vorhergehenden Ansprüche,
**dadurch gekennzeichnet, daß**
eine Heiz-/Kühlzyklensteuerungseinrichtung vorgesehen ist, deren Steuerungsausgänge mit folgenden Elementen versehen sind:
- Druckregelventilen (12, 13) für Wasserdampf im Einlaß- und/oder Auslaßkanal der Spritzgießform (1);
- mindestens ein Ventil (14) in einem Kühlmittelzuführkanal;
- mindestens ein Druckluftventil (15) in einem Druckluftzuführungskanal.

14. Spritzgießform nach Anspruch 13,
**dadurch gekennzeichnet, daß**
die Heiz-/Kühlzyklensteuerungseinrichtung mit wenigstens einem thermischen Sensor (16) verbunden ist, der in wenigstens einem Bereich des vom Kühlmittel oder Heizmittel beaufschlagten Hohlraumes (4) der Spritzgießform (1) angeordnet ist.

15. Verfahren zur Beheizung einer Spritzgießform nach wenigstens einem der vorhergehenden Ansprüche 1-14, wobei als Heizmedium ein dampfartiges Medium, insbesondere Wasserdampf verwendet wird als Kühlmedium ein expandierendes Gas, insbesondere CO₂ verwendet wird,
eine erste Heizphase durchlaufen wird, bei welcher der Wasserdampf unter hohem Druck steht,
wenigstens eine zweite Phase durchlaufen wird, bei welcher der Druck des Wasserdampfes abgesenkt wird und ein erstes Herunterkühlen der Oberflächen erreicht wird, und dann wenigstens eine Kühlphase eingeleitet wird, bei welcher das Kühlmedium CO₂ eingeleitet wird.

## Claims

1. Injection mould (1) for use in an injection-moulding device, comprising at least one mould element (2), which is provided with a combined heating and cooling device, with which at least one mould surface (3) is thermally variable, wherein the heating and cooling device has at least one cavity (4) extending behind the mould surface (3), wherein the cavity (4), as a combined condensation-evaporation space, is exposed to both a fed-in expanding cooling medium and alternatively a fed-in vaporous heating medium,
**characterized in that**
the number of cooling-medium feed openings (5) into the cavity (4) is greater than the number of heating-medium feed openings (6).

2. Injection mould according to Claim 1,
**characterized in that**
the structure both of the cavity (4) and of the cooling-medium feed openings (5) leading into the latter is produced by a generative process.

3. Injection mould according to Claim 1 or 2,
**characterized in that**
the cooling-medium feed openings (5) are arranged at such a distance from one another that the cooling effect regions emanating from them respectively overlap.

4. Injection mould according to one of Claims 1-3,
**characterized in that**
the cooling-medium feed openings (5) are formed by the generative process in the manner of nozzles (A) .

5. Injection mould according to one of the preceding claims,
**characterized in that**
as a result of the generative production process, the cooling-medium feed openings (5) have a porous gas-permeable structure (B).

6. Injection mould according to one of the preceding claims,
**characterized in that**
the cavity (4) extends over an area behind the mould surface (3) to be cooled and a plurality of supporting elements (7) are arranged in the cavity (4) .

7. Injection mould according to one of the preceding claims,
**characterized in that**
the supporting elements (7) are at least partly provided with porous portions (B') and the cooling-medium feed openings (5) are arranged in them.

8. Injection mould according to one of the preceding claims,
**characterized in that**
the feeding direction (8) of the cooling medium is directed substantially against the mould surface (3) .

9. Injection mould according to one of the preceding claims,
**characterized in that**
the supporting columns (7) are formed as heat and cold transfer elements.

10. Injection mould according to one of the preceding claims,
**characterized in that**
as a result of the generative production process, a layer (11) of lower density is arranged on the rear side of the cavity (4) in order to achieve an insulating effect.

11. Injection mould according to one of the preceding claims,
**characterized in that**
the wall of the cavity (5) in the region between the supporting columns (7) is formed in a vaulted manner.

12. Injection mould according to one of the preceding claims,
**characterized in that**
the feed openings (5) for the cooling medium are arranged substantially centrally between supporting columns (7) surrounding the feed openings (5).

13. Injection mould according to one of the preceding claims,
**characterized in that**
a heating/cooling-cycle control device is provided, the control inputs of which are provided with the following elements:
- pressure control valves (12, 13) for steam in the inlet and/or outlet channel of the injection mould (1);
- at least one valve (14) in a cooling-medium feed channel;
- at least one compressed-air valve (15) in a compressed-air feed channel.

14. Injection mould according to Claim 13,
**characterized in that**
the heating/cooling-cycle control device is connected to at least one thermal sensor (16), which is arranged in at least one region of the cavity (4) of the injection mould (1) that is exposed to the cooling medium or heating medium.

15. Method for heating an injection mould according to at least one of the preceding Claims 1-14,
wherein
a vaporous medium, in particular steam, is used as the heating medium and an expanding gas, in particular CO₂, is used as the cooling medium,
a first heating phase is performed, in which the steam is pressurized,
at least a second phase is performed, in which the pressure of the steam is lowered and a first cooling down of the surfaces is achieved, and then at least one cooling phase is initiated, in which the cooling medium CO₂ is introduced.

## Revendications

1. Moule de moulage par injection (1) destiné à être utilisé dans un dispositif de moulage par injection, avec au moins un élément de moule (2), qui est muni d'un dispositif combiné de chauffage et de refroidissement, avec lequel au moins une surface de moule (3) peut subir des variations thermiques, dans lequel le dispositif de chauffage et de refroidissement présente au moins une cavité (4) s'étendant derrière la surface de moule (3), dans lequel la cavité (4) peut, en tant qu'espace combiné de condensation et évaporation, être exposée aussi bien à un agent de refroidissement dilatable apporté qu'aussi alternativement à un agent de chauffage de type vapeur apporté, **caractérisé en ce que** le nombre des ouvertures d'apport d'agent de refroidissement (5) dans la cavité (4) est plus grand que celui des ouvertures d'apport d'agent de chauffage (6).

2. Moule de moulage par injection selon la revendication 1, **caractérisé en ce que** la structure aussi bien de la cavité (4) que des ouvertures d'apport d'agent de refroidissement (5) conduisant à celle-ci est produite par un procédé de fabrication additive.

3. Moule de moulage par injection selon la revendication 1 ou 2, **caractérisé en ce que** les ouvertures d'apport d'agent de refroidissement (5) sont disposées avec une telle distance l'une de l'autre que les zones de l'effet de refroidissement partant de celles-ci se chevauchent mutuellement.

4. Moule de moulage par injection selon l'une quelconque des revendications 1 à 3, **caractérisé en ce que** les ouvertures d'apport d'agent de refroidissement (5) sont réalisées en forme de buses (A) par le procédé de fabrication additive.

5. Moule de moulage par injection selon l'une quelconque des revendications précédentes, **caractérisé en ce que** les ouvertures d'apport d'agent de refroidissement (5) présentent une structure de passage de gaz poreuse (B) produite par le procédé de fabrication additive.

6. Moule de moulage par injection selon l'une quelconque des revendications précédentes, **caractérisé en ce que** la cavité (4) s'étend à plat derrière la surface de moule (3) à refroidir et une multiplicité d'éléments de soutien (7) sont disposés dans la cavité (4) .

7. Moule de moulage par injection selon l'une quelconque des revendications précédentes, **caractérisé en ce que** les éléments de soutien (7) sont munis au moins partiellement de parties poreuses (B') et les ouvertures d'apport d'agent de refroidissement (5) sont disposées dans celles-ci.

8. Moule de moulage par injection selon l'une quelconque des revendications précédentes, **caractérisé en ce que** la direction d'apport (8) de l'agent de refroidissement est dirigée essentiellement vers la surface de moule (3).

9. Moule de moulage par injection selon l'une quelconque des revendications précédentes, **caractérisé en ce que** les colonnes de soutien (7) sont réalisées sous la forme d'éléments de transmission de chaleur et de froid.

10. Moule de moulage par injection selon l'une quelconque des revendications précédentes, **caractérisé en ce qu'**une couche (11) de plus faible densité est disposée sur le côté arrière de la cavité (4) par le procédé de fabrication additive, afin d'obtenir un effet d'isolation.

11. Moule de moulage par injection selon l'une quelconque des revendications précédentes, **caractérisé en ce que** la paroi de la cavité (4) est réalisée en forme de voûte dans la région située entre les colonnes de soutien (7).

12. Moule de moulage par injection selon l'une quelconque des revendications précédentes, **caractérisé en ce que** les ouvertures d'apport (5) pour le milieu de refroidissement sont disposées essentiellement au centre entre des colonnes de soutien (7) entourant les ouvertures d'apport (5).

13. Moule de moulage par injection selon l'une quelconque des revendications précédentes, **caractérisé en ce qu'**il est prévu un dispositif de commande de cycles de chauffage-refroidissement, dont les sorties de commande sont munies des éléments suivants:
- des soupapes de régulation de pression (12, 13) pour la vapeur d'eau dans le canal d'entrée et/ou de sortie du moule de moulage par injection (1);
- au moins une soupape (14) dans un canal d'apport d'agent de refroidissement;
- au moins une soupape à air comprimé (15) dans un canal d'apport d'air comprimé.

14. Moule de moulage par injection selon la revendication 13, **caractérisé en ce que** le dispositif de commande de cycles de chauffage-refroidissement est relié à au moins un capteur thermique (16), qui est disposé dans au moins une région de la cavité (4) du moule de moulage par injection (1) exposée à l'agent de refroidissement ou à l'agent de chauffage.

15. Procédé de chauffage d'un moule de moulage par injection selon au moins une des revendications 1 à 14, dans lequel on utilise comme milieu de chauffage un milieu de type vapeur, en particulier de la vapeur d'eau et on utilise comme milieu de refroidissement un gaz dilatable, en particulier du CO₂, on exécute une première phase de chauffage, dans laquelle la vapeur d'eau se trouve sous haute pression, on exécute au moins un deuxième phase, dans laquelle on abaisse la pression de la vapeur d'eau et on atteint un premier sous-refroidissement des surfaces, et on lance alors au moins une phase de refroidissement, dans laquelle on introduit le milieu de refroidissement CO₂.
